# EUROPÄISCHE PATENTSCHRIFT

(11) **EP 0 924 113 B1**
(45) Veröffentlichungstag und Bekanntmachung des Hinweises auf die Patenterteilung: **12.02.2003**
(21) Anmeldenummer: 98122087.4
(22) Anmeldetag: 21.11.1998
(51) Int. Cl.: B60G 3/20

(54) **Einzelradaufhängung mit einem über eine Koppelstange auf einem Einzellenker abgestützten Radträger**
Independent suspension with a kingpin linked by a rod to a suspension lever
Suspension indépendante avec un porte-fusée relié par une barre de liaison à un levier de suspension

(30) Priorität: 17.12.1997 DE 19756064
(43) Veröffentlichungstag der Anmeldung: 23.06.1999
(73) Patentinhaber: DaimlerChrysler AG, 70567 Stuttgart (DE)
(72) Erfinder: Brühl, Hubert, 73550 Waldstetten (DE)

(56) Entgegenhaltungen:
- EP-A- 0 141 093
- EP-A- 0 374 504
- DE-A- 1 938 851
- PATENT ABSTRACTS OF JAPAN vol. 96, no. 12, 26. Dezember 1996 (1996-12-26) -& JP 08 197920 A (NISSAN), 6. August 1996 (1996-08-06)

## Beschreibung

Die Erfindung betrifft eine Einzelradaufhängung für Vorderräder eines Kraftfahrzeuges mit einem zu Lenkzwecken schwenkbaren Radträger, dessen unteres Ende an einem unteren Lenker gelagert ist und dessen oberer Bereich sich zum einen über eine Koppelstange an diesem unteren Lenker und zum anderen über einen oberen Lenker am Fahrzeugaufbau abstützt, wobei der untere Lenker aus zwei separaten Lenkern besteht, deren Wirkungslinien zumindest in der Projektion auf die Fahrbahn ein einem Quer- oder Schräglenker entsprechendes Dreieck bilden und die theoretische Lenkachse in einem Punkt (G) oder den Punkten (G) und (G') schneiden, oder zumindest im Bereich dieses oder dieser Punkte kreuzen, wobei die Lenker räumlich vor der theoretischen Lenkachse in zwei separaten, benachbarten Gelenkstellen am Radträger enden.

Aus der DE 26 42 939 ist eine bauraumsparende Einzelradaufhängung für ein lenkbares Kraftfahrzeugrad bekannt, bei der der Radträger über einen unteren Schräglenker und einen oberen Stablenker am Fahrzeugaufbau an drei Stellen angelenkt ist. Der Radträger stützt sich über eine Koppelstange am Schräglenker ab. Die Gelenkstellen zwischen dem Radträger und den beiden Lenkern liegen auf der Lenk- bzw. Spreizungsachse. Dadurch ist der Bauraum für die radseitige Bremseinrichtung begrenzt.

Ferner ist aus der JP-A-8 197920 eine Einzelradaufhängung bekannt, bei der der Radträger über zwei untere Einzellenker und einen oberen Querlenker am Fahrzeugaufbau angelenkt ist. Zwischen dem unteren, hinteren Einzellenker und dem Radträger ist zudem eine Koppelstange gelenkig gelagert eingebaut. Der obere Querlenker und die Koppelstange bilden einen sog. oberen Dreieckslenker. Da zum einen der obere Querlenker quer zur Fahrzeuglängsrichtung ausgerichtet und zum anderen die Koppelstange am unteren, hinteren Lenker in unmittelbarer Nähe des Radträgers angelenkt ist, hat dieser Dreickslenker eine - in Längsrichtung gesehen - kurze Abstützbasis, über die nur relativ kleine Antriebs- und Bremsmomente abgestützt werden können. Da der obere Querlenker absolut quer zur Fahrtrichtung steht, kann er kein Moment aufnehmen.

Der vorliegenden Erfindung liegt das Problem zugrunde, eine Einzelradaufhängung zu schaffen, die bei möglichst wenigen aufbauseitigen Anlenkstellen genug Platz für eine groß dimensionierte radseitige Bremseinrichtung läßt.

Das Problem wird mit den Merkmalen des Hauptanspruchs gelöst. Bei der neuen Einzelradaufhängung ist der obere Lenker zwischen einer sich am Radträger befindenden Gelenkstelle und einer am Fahrzeugaufbau befindenden Anlenkstelle so angeordnet, dass letztere gegenüber dieser Gelenkstelle nach vorn - zur Fahrzeugfront hin - versetzt ist.

Durch diese Anordnung beschreibt der obere Lenker zusammen mit der Koppelstange ein Lenkerdreieck, das eine breite Basis zur Abstützung von Antriebs- und Bremsmomenten darstellt.

Bei dieser Weiterentwicklung des bekannten Koppelachsprinzips für eine Vierlenkerachse kann die Lenkachse am Rad frei gewählt werden, so daß im Felgenbereich auch eine groß dimensionierte Bremseinrichtung genug Platz hat. Die wichtigen achskinematischen Kenngrößen wie z.B. der Lenkrollradius, der Stoßradius oder die Nachlaufstrecke können trotz eingeschränkter Platzverhältnisse frei gewählt werden. Durch die Aufteilung des unteren Lenkers in zwei Einzellenker und die Anlenkung der Koppelstange an oder nahe an die Wirkungslinie eines unteren Lenkers ergibt sich für das Rad eine momentane Lenkachse, die zumindest näherungsweise durch den Schnitt- oder Kreuzungspunkt der Wirkungslinien der unteren Einzellenker geht.

Da zumindest die unteren Lenker räumlich vor der Lenkachse enden, ergibt sich zwischen der Felgenschüssel des gelenkten Rades und dem Radträger ein großer Freiraum, der z.B. für eine radseitige Bremseinrichtung genutzt werden kann.

Weitere Einzelheiten der Erfindung ergeben sich aus den nicht zitierten Unteransprüchen und den nachfolgenden Beschreibungen von zwei schematisch dargestellten Ausführungsformen:
- Figur 1:: Einzelradaufhängung in Rückansicht mit zwei in einer Ebene liegenden unteren Lenkern;
- Figur 2:: Draufsicht zu Figur 1;
- Figur 3:: Seitenansicht zu Figur 1;
- Figur 4:: Einzelradaufhängung in Rückansicht mit zwei in verschiedenen Ebenen liegenden unteren Lenkern;
- Figur 5:: Draufsicht zu Figur 4;
- Figur 6:: Einzelradaufhängung in Rückansicht bei der die Wirkungslinien des oberen Lenkers und der Koppelstange sich nicht auf der Lenkachse schneiden.

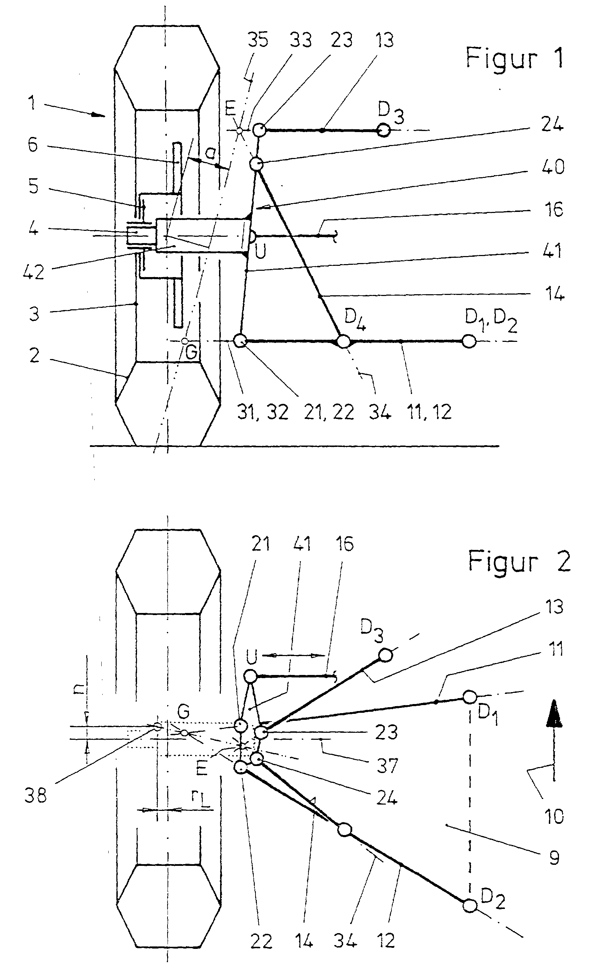

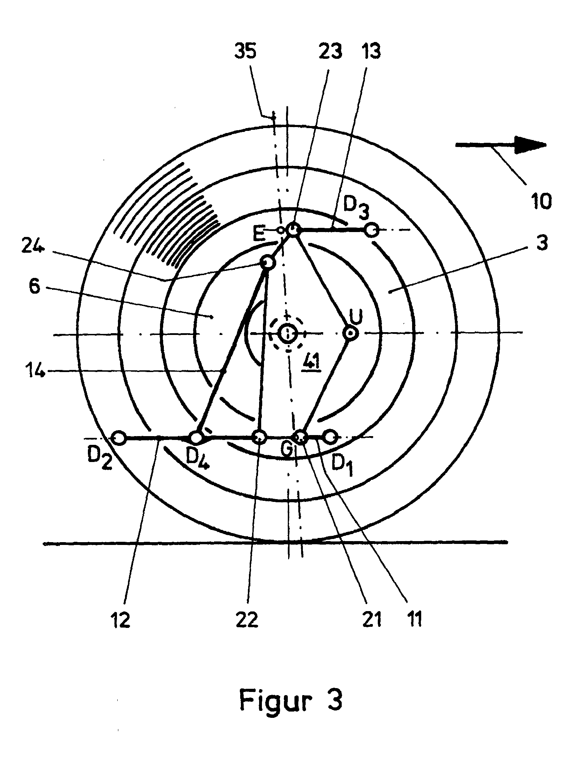

Die Figuren 1 bis 3 zeigen drei Ansichten einer Einzelradaufhängung für ein beispielsweise antreib- und lenkbares Kraftfahrzeugrad (1). Das aus einer Felge (3) und einem Reifen (2) bestehende Rad (1) ist an einem schwenkbaren Radträger (40) gelagert. Im Radträger (40) sitzt wälzgelagert ein Achswellenstummel (4), der in der Regel Teil eines hier nicht dargestellten Gleichlauf-Verschiebegelenks ist. Auf dem Achswellenstummel (4) sitzt drehstarr eine Radnabe (5), die eine Bremsscheibe (6) und das Rad (1) trägt.

Der im allgemeinen sternförmige Radträger (40) ist hier vereinfacht als eine ebene, fünfeckige Platte (41) mit einem angeformten zylindrischen Achszapfenrohr (42) dargestellt. Die Ecken der Platte (41) sind die Gelenkstellen (21-24, U) .

Der Radträger (40) ist am Fahrzeugaufbau über vier Lenker (11-13, 16) in den Anlenkpunkten (D₁-D₃) angelenkt. Der Anlenkpunkt für den vierten Lenker, den Spurstangenabschnitt (16), ist nicht dargestellt.

Die beiden unteren Lenker (11) und (12), die am Radträger (40) in den Gelenkstellen (21) und (22) enden, liegen beispielsweise in einer zur Fahrbahn parallelen Ebene. Dabei bilden die Wirklinien (31) und (32) der Lenker (11, 12) die Schenkel eines Dreiecks (9), dessen radseitige Spitze im Idealfall auf oder in der Nähe der theoretischen bzw. momentanen Lenkachse (35) liegt. Die unteren Einzellenker (11, 12) und die Lenkachse (35) schneiden sich in den Figuren im Punkt (G), vgl. Figur 2. Je nach konstruktiver Ausführungsform kreuzen die Wirkungslinien (31) und (32) die momentane Lenkachse (35) im Bereich des Punktes (G). Hierbei können sich die Wirkungslinien (31) und (32) - anstatt sich zu schneiden - ebenfalls nur kreuzen.

Die Lenkachse (35) schneidet im Ausführungsbeispiel die Radaufstandsfläche, vgl. Figur 2, außerhalb ihres Zentrums im Punkt (38). Dieser Punkt liegt - in Fahrtrichtung (10) gesehen - um die Nachlaufstrecke "n" vor dem Zentrum. Ferner ist er um den negativen Lenkrollradius "r_{L}" gegenüber dem Zentrum versetzt.

Zwischen dem hinteren, unteren Lenker (12) und dem Radträger (40) ist eine Koppelstange (14) gelenkig angeordnet. Die Koppelstange (14) ist dazu am Lenker (12) in einer Anlenkste (D₄) und am Radträger (40) in der Gelenkstelle (24) gelagert. Sie stützt den Radträger (40) gegenüber dem Lenker (12) ab. Die Gelenkstelle (24) und die Anlenkstelle (D₄) bilden zusammen mit der auf dem Radträger (40) liegenden Gelenkstelle (22) ein Dreieck, das Teil einer Ebene ist, in der zumindest hier im Ausführungsbeispiel der Figuren 1-3 die theoretische Lenkachse (35) liegt.

Oberhalb der horizontalen Radmittenebene ist ein dritter Lenker (13) zwischen dem Fahrzeugaufbau und dem Radträger (40) angeordnet. Der obere Lenker (13) stützt sich aufbauseitig in der Anlenkstelle (D₃) ab. Am Radträger (40) ist er in der Gelenkstelle (23) gelagert. Die Anlenkstelle (D₃) ist zur Abstützung der positiven und negativen Beschleunigungskräfte gegenüber der Gelenkstelle (23) nach vorn - zur Fahrzeugfront hin - versetzt.

Die Wirkungslinie (33) des beispielsweise annähernd horizontal ausgerichteten Lenkers (13) schneidet oder kreuzt die theoretische Lenkachse (35) im Bereich des Punktes (E). In den Figuren 1 bis 5 endet der Lenker (23) räumlich vor dem Punkt (E). Da hier jedoch genug Bauraum zur Verfügung steht, kann die Radaufhängung auch so konstruiert sein, daß der Lenker (13) auf der Lenkachse (35) endet. Unabhängig hiervon schneidet die Wirkungslinie (33) die von den Punkten bzw. Gelenk- oder Anlenkstellen (22), (24) und (D₄) aufgespannte Ebene. Gegebenenfalls liegt der Schnittpunkt - wie beispielsweise der Punkt (E) in Figur 2 - auf der theoretischen Lenkachse (35).

Am Radträger (40) ist beispielsweise im Bereich vor der Radmittellinie (37) die Gelenkstelle (U) angeordnet. Die Gelenkstelle (U) stellt das Ende des hier in der Platte (41) integrierten Spurhebels dar. In ihr ist ein beispielsweise achsparalleler Spurstangenabschnitt (16) gelenkig gelagert.

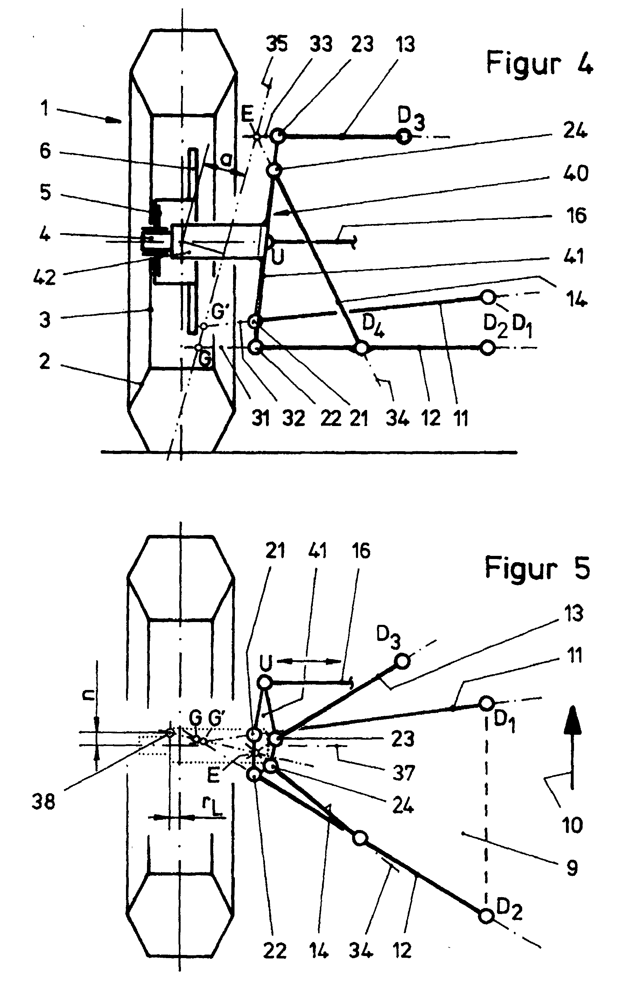

Die Figuren 4 und 5 zeigen eine Einzelradaufhängung, bei der die Wirkungslinien (31) und (32) der unteren Lenker (11) und (12) in unterschiedlichen, sich schneidenden Ebenen liegen. Der vordere Lenker (11) liegt höher als der hintere Lenker (12) und ist zum Rad hin nach unten geneigt. Seine Wirkungslinie (31) schneidet die theoretische Lenkachse (35) im Punkt (G').

Die Ebenen, in den die Wirkungslinien (31) und (32) liegen, können gegebenenfalls auch parallel ausgerichtet sein.

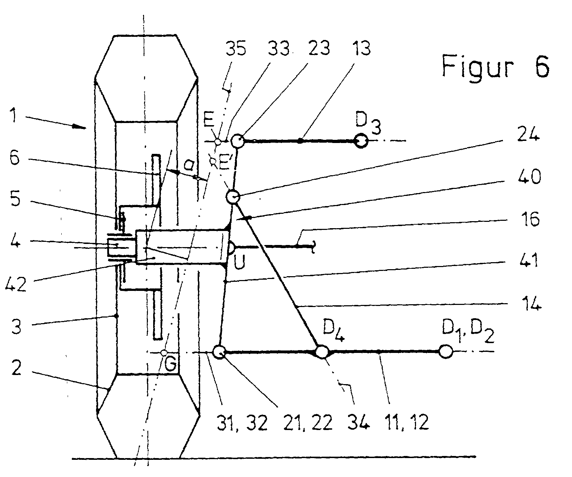

In Figur 6 ist eine Einzelradaufhängung gezeigt, bei der sich die Wirkungslinie (33) des oberen Lenkers (13) und die Wirkungslinie (34) der Koppelstange (14) die Lenkachse (35) in den verschiedenen Punkten (E) und (E') schneiden. Der Punkt (E') liegt hier unterhalb des Punktes (E).

Die Einzelradaufhängung ist mit Hilfe einer üblichen - hier nicht dargestellten - Fahrzeugfeder und einem bekannten Stoßdämpfer oder einem Federbein am Fahrzeugaufbau abgestützt. Die Abstützung der Feder und des Dämpfers bzw. des Federbeins an der Einzelradaufhängung erfolgt beispielsweise am vorderen, unteren Lenker (11). Bei einer Einzelradaufhängung mit angetriebenem Fahrzeugrad werden die Anlenkpunkte am Lenker (11) so gewählt, daß die antreibende Gelenkwelle den erforderlichen Bewegungsraum hat. Gegebenenfalls werden zwischen dem Lenker und den Feder- und/oder Dämpferelementen ein Zwischenelement angeordnet, mit dem der Bewegungsraum der Gelenkwelle umgangen wird.

### Bezugszeichenliste

- 1: Rad
- 2: Reifen
- 3: Felge
- 4: Achswellenstummel
- 5: Radnabe
- 6: Bremsscheibe

- 9: Dreieck, aus unteren Lenkern (11, 12)
- 10: Fahrtrichtung

- 11: unterer Lenker, vorn
- 12: unterer Lenker, hinten
- 13: oberer Lenker
- 14: Koppelstange

- 16: Spurstangenabschnitt

- 21: Gelenkstelle: Radträger/unterer Lenker (11)
- 22: Gelenkstelle: Radträger/unterer Lenker (12)
- 23: Gelenkstelle: Radträger/oberer Lenker (13)
- 24: Gelenkstelle: Radträger/Koppelstange (14)

- 31: Wirkungslinie des unteren Lenkers (11)
- 32: Wirkungslinie des unteren Lenkers (12)
- 33: Wirkungslinie des oberen Lenkers (13)
- 34: Wirkungslinie der Koppelstange (14)
- 35: Lenkachse, theoretisch

- 37: Radmittellinie, Rotationsachse
- 38: Schnittpunkt von Lenkachse (35) und Latsch

- 40: Radträger
- 41: Platte
- 42: Achszapfenrohr

- a: Stoßradius, Lenkkrafthebelarm
- D₁-D₃: Anlenkstellen der Lenker am Fahrzeugaufbau
- D₄: Anlenkstellen der Koppelstange (14) am Lenker (12)
- E: Schnittpunkt von Lenkachse und Wirkungslinie des oberen Lenkers (13)
- E': Schnittpunkt von Lenkachse (35) und Wirkungslinie der Koppelstange (14)
- G, G': Schnittpunkte von Lenkachse und Wirkungslinien der unteren Lenker (11) und (12)
- n: Nachlaufstrecke
- r_{L}: Lenkrollradius
- U: Gelenkstelle zu Spurstangenabschnitt (16)

## Patentansprüche

1. Einzelradaufhängung für Vorderräder eines Kraftfahrzeuges mit einem zu Lenkzwecken schwenkbaren Radträger (40, 45), dessen unteres Ende an einem unteren Lenker gelagert ist und dessen oberer Bereich sich zum einen über eine Koppelstange (14) an diesem unteren Lenker und zum anderen über einen oberen Lenker (13) am Fahrzeugaufbau abstützt, wobei der untere Lenker aus zwei separaten Lenkern (11, 12) besteht, deren Wirkungslinien (31, 32) zumindest in der Projektion auf die Fahrbahn ein einem Quer- oder Schräglenker entsprechendes Dreieck (9) bilden und die theoretische Lenkachse (35) in einem Punkt (G) oder den Punkten (G) und (G') schneiden, oder zumindest im Bereich dieses oder dieser Punkte kreuzen, wobei die Lenker (11, 12) räumlich vor der theoretischen Lenkachse (35) in zwei separaten, benachbarten Gelenkstellen (21, 22) am Radträger (40, 45) enden, **dadurch gekennzeichnet,**
- **dass** der obere Lenker (13) zwischen einer sich am Radträger (40, 45) befindenden Gelenkstelle (23) und einer sich am Fahrzeugaufbau befindenden Anlenkstelle (D₃) angeordnet ist, wobei die Anlenkstelle (D₃) gegenüber der Gelenkstelle (23) nach vorn - zur Fahrzeugfront hin - versetzt ist.

2. Einzelradaufhängung gemäß Anspruch 1, **dadurch gekennzeichnet, daß** die Wirkungslinie des oberen Lenkers (13) die theoretische Lenkachse (35) in einem Punkt (E) schneidet, oder zumindest im Bereich dieses Punktes (E) kreuzt, wobei der Lenker (13) räumlich vor dem Punkt (E) in einer Gelenkstelle (23) am Radträger (40, 45) endet.

3. Einzelradaufhängung gemäß Anspruch 1, **dadurch gekennzeichnet, daß** die Wirkungslinie (34) der Koppelstange (14) die theoretische Lenkachse (35) im Punkt (E) schneidet, oder zumindest im Bereich dieses Punktes kreuzt, wobei der Lenker (13) räumlich vor dem Punkt (E) in einer Gelenkstelle (23) am Radträger (40,45) endet.

## Claims

1. Single-wheel suspension for the front wheels of a vehicle with a wheel support (40, 45), that can swivel for steering purposes, the lower end of which is supported on a lower wheel fork and the upper area of which is supported, on the one hand, by means of a connection bar (14), on this lower wheel fork, and, on the other hand, is supported, by means of an upper wheel fork (13) on the vehicle body, whereby the lower wheel fork comprises two separate wheel forks (11, 12) the lines of action (31, 32) of which, at least in the projection onto the road, form triangle (9) corresponding to a transverse or inclined guide rod and divide the theoretical steering axis (35) at a point (G) or the points (G) and (G'), or at least cross this or these points, whereby the wheel forks (11, 12) end spatially before the theoretical steering axis (35) in two separate, adjacent, moving links (21, 22) on the wheel support (40 , 45), **characterized in that**
the upper wheel fork (13) is disposed between a moving link (23) located on the wheel support (40, 45) and an articulation point (D₃) on the vehicle body, whereby the articulation point (D₃) is displaced forwards, towards the front of the vehicle, in relation to the moving link (23).

2. Single-wheel suspension in accordance with claim 1, **characterized in that** the line of action of the upper wheel fork (13) crosses the theoretical steering axis (35) at a point (E), or at least crosses it in the area of this point (E), whereby the wheel fork (13) ends spatially before the point (E), in a moving link (23), on the wheel support (40, 45).

3. Single wheel suspension in accordance with claim 1, **characterized in that** the line of action (34) of the connection bar (14) crosses the theoretical steering axis (35) at point (E), or at least crosses it in the area of this point, whereby the wheel fork (13) ends, spatially, on the wheel support (40, 45), in a moving link (23), before the point (E).

## Revendications

1. Suspension indépendante pour les roues avant d'un véhicule automobile, comportant un porte-fusée (40, 45) mobile en pivotement à des fins de direction, dont l'extrémité inférieure est montée sur un bras inférieur et dont la zone supérieure prend appui d'une part via une barre de liaison (14) sur ce bras inférieur et d'autre part via un bras supérieur (13) sur la caisse du véhicule, le bras inférieur étant constitué par deux bras séparés (11, 12) dont les lignes d'action (31, 32) forment, au moins en projection sur la chaussée, un triangle (9) correspondant à un bras transversal ou oblique, et recoupent l'axe de direction théorique (35) à un point (G) ou aux points (G) et (G'), ou le croisent au moins à ce point ou à ces points, les bras (11, 12) se terminant, dans l'espace, en avant de l'axe de direction théorique (35), par deux emplacements articulés voisins séparés (21, 22) sur le porte-fusée (40, 45), **caractérisée en ce que**
- le bras supérieur (13) est agencé entre un emplacement articulé (23) situé sur le porte-fusée (40, 45) et un emplacement d'articulation (D₃) situé sur la caisse du véhicule, l'emplacement d'articulation (D₃) étant décalé vers l'avant vers la partie antérieure du véhicule par rapport à l'emplacement articulé (23).

2. Suspension indépendante selon la revendication 1, **caractérisée en ce que** la ligne d'action du bras supérieur (13) recoupe l'axe de direction théorique (35) à un point (E), ou le croise au moins dans la zone de ce point (E), le bras (13) se terminant, dans l'espace, en avant du point (E) à un emplacement articulé (23) sur le porte-fusée (40, 45).

3. Suspension indépendante selon la revendication 1, **caractérisée en ce que** la ligne d'action (34) de la barre de liaison (14) recoupe l'axe de direction théorique (35) au point (E), ou le croise au moins dans la zone de ce point, le bras (13) se terminant, dans l'espace, en avant du point (E) à un emplacement articulé (23) sur le porte-fusée (40, 45).
